Europäisches Patentamt

European Patent Office

Office européen des brevets

(11) Publication number: **0 395 814**
**A2**

# EUROPEAN PATENT APPLICATION

(21) Application number: 89310940.5

(51) Int. Cl.⁵: **B32B 27/30, B32B 31/04**

(22) Date of filing: 24.10.89

(30) Priority: **01.05.89 US 345316**

(43) Date of publication of application:
**07.11.90 Bulletin 90/45**

(84) Designated Contracting States:
**BE CH DE ES FR GB IT LI LU NL SE**

(71) Applicant: **GENCORP INC.**
**175 Ghent Road**
**Akron Ohio 44313-3300(US)**

(72) Inventor: **Hidinger, David C.**
**542 Springwood Circle, S.W.**
**New Philadelphia Ohio 44663(US)**
Inventor: **Stamper, Richard W.**
**3670 Knepper Drive**
**Lambertville Michigan 48144(US)**
Inventor: **Murray, F. Joseph**
**5910 Colonial Court**
**Sylvania Ohio 43560(US)**

(74) Representative: **Paget, Hugh Charles Edward**
**et al**
**MEWBURN ELLIS 2 Cursitor Street**
**London EC4A 1BQ(GB)**

(54) **Polyvinylchloride lamina and process for making it.**

(57) An adhesive-free polyvinyl chloride lamina (10),
e.g. for the interiors of vehicles, is made by heating
a rigid polyvinyl chloride substrate (50) to an effec-
tive temperature and applying and fusing a flexible
foam-containing polyvinyl chloride sheet 15) thereto.
The formed polyvinyl chloride lamina is subsequent-
ly thermoformed into a desired interior article. Scrap
and trim from the process can be recycled and
subsequently used in the rigid substrate, since PVC
homopolymer is used.

## POLYVINYLCHLORIDE LAMINA AND PROCESS FOR MAKING IT

The present invention relates to processes for applying a flexible polyvinyl chloride sheet to a rigid polyvinyl chloride substrate, thermoforming the resulting lamina into vehicle interior products, and to the products of the processes.

Heretofore, lamina generally was not entirely made from polyvinyl chloride. Rather, the rigid portions of lamina were usually ABS,wood such as chipboard, plywood, or the like, polypropylene, polyurethane, cardboard, or the like. Such lamina was generally made by a process involving numerous steps including forming the rigid substrate in the shape of a final article, applying an adhesive to the substrate, thereafter, forming a flexible layer to the rigid substrate and bonding the flexible layer to the substrate with an adhesive. Due to the inclusion of the adhesive and other non-polyvinyl chloride layers, the various scrap or trim from the process could not be recycled or utilized and are generally expensive.

U. S. Patent No. 2,729,585 to W. Gruber et al relates to adhesively joining article materials containing softeners, either to each other or to layers of other non-metallic substances such as wood, leather, cardboard, etc., and it has for its object to provide a novel and improved process for this purpose.

U.S. Patent No. 2,879,547 to Morris relates to methods of uniting two or more thermoplastic materials into laminar flexible sheet form. In particular, the invention is concerned with such methods where high temperature and pressure are utilized in forming fused laminations. The invention is also concerned with sheet material made by the methods of the invention.

U.S. Patent No. 2,918,702 to Wetteran relates to flexible surface coverings which have a plastic decorative wear layer applied to a resilient foam back and particularly to a method of producing such coverings.

U.S. Patent No. 3,272,688 to Holmstrom et al relates to the production of a cushion type of flooring or underlayment presenting a wear-resistant and preferably ornamental surface ply permanently and securely laminated to an intermediate or underlying cushion ply of vinyl sponge.

U.S. Patent No. 3,293,108 to Nairn et al relates to cellular foam products and particularly to such products having an embossed surface.

U.S. Patent No. 3,394,210 to Franze relates to a method of making a foamed thermoplastic vinyl resin sheet material and is more particularly directed to a method of forming a foamed vinyl chloride-containing resin sheet material from a free-flowing particulate mix.

U.S. Patent No. 3,399,107 to Biskup et al relates to flexible decorative plastic sheets and particularly to such products having a resilient cellular foam layer.

U.S. Patent No. 3,501,370 to Juredine relates to a top-coated, foamed polyvinyl chloride article, to an improved top-coating for foamed polyvinyl chloride articles, and to a method for making such articles.

U.S. Patent No. 3,540,977 to Schickendanz relates to foam compositions having a very thin film of a flexible, soft adhesion agent thereon to promote adherence of the foam structure to extremely smooth surfaces.

U.S. Patent No. 3,573,964 to Jones relates to a method and apparatus for applying coatings of vinyl and like plastics to fabrics.

U.S. Patent no. 3,976,526 to Hovey et al relates to composite panels which are used in building and vehicle construction. Generally such panels comprise a core of a rigid foamed plastic and have a rigid facing sheet affixed to at least one face, and in some applications, affixed to two major surfaces of the sheet.

U.S. Patent No. 3,987,229 to Rairdon et al relates to decorative laminate materials and to the process for producing such laminates.

U.S. Patent No. 3,997,704 to Aurichio relates to a process for coating a material, e.g., a vinyl material, to improve its wear and/or weather resistance and the coated article formed thereby.

U.S. Patent Nos. 4,100,325 and 4,183,777 to Summers et al relate to improved weather resistant products which are made by coextruding or laminating a plasticized vinyl chloride capstock with a substrate of rigid vinyl chloride polymers, chlorinated vinyl chloride polymers, or acrylonitrile-butadiene-styrene polymers.

U.S. Patent No. 4,278,728 to Honda et al relates to an embossed interior finishing material having excellent cigarette mark resistance.

The problem addressed herein is to provide a new process for making a polyvinyl chloride laminar material and a new material thus produced, which preferably is useful for making vehicle interior products by thermoforming. A preferred goal is to achieve cost saving by enabling recycling of material.

Accordingly, in one aspect the invention provides a process for forming a polyvinyl chloride lamina characterised in that a flexible polyvinyl chloride sheet and a substrate polyvinyl chloride sheet for forming a rigid polyvinyl chloride substrate are applied together and thermally fused to form said lamina.

In an another aspect, there is provided a process for forming a polyvinyl chloride vehicle interior lamina comprising the steps of:

forming a flexible polyvinyl chloride sheet; forming a rigid polyvinyl chloride substrate; applying said flexible polyvinyl chloride sheet to said rigid polyvinyl chloride substrate with heating of said substrate to an effective temperature whereby said flexible polyvinyl chloride sheet fuses thereto and forms a polyvinyl chloride lamina, and

subsequently thermorforming said polyvinyl chloride lamina into an adhesive-free polyvinyl chloride vehicle interior lamina.

The flexible sheet desirably comprises a foam layer, and is preferably of polyvinyl chloride homopolymer.

In a preferred embodiment of the invention flexible foamed polyvinyl chloride sheets having a flexibility of an apparent bending modulus of from about 100 psi to about 50,000 psi are attached to a rigid polyvinyl chloride substrate, e.g. by extruding or calendering the rigid sheet onto the flexible polyvinyl chloride at an effective temperature such that it fuses the rigid polyvinyl chloride sheet thereto and forms an all polyvinyl chloride lamina which is free of any adhesive. Subsequently, the lamina is thermoformed and trimmed into an article for use within the interior of a transportation vehicle. The rigid polyvinyl chloride substrate may contain small amounts of a heat deformation resistant polymer such as a polymer made from acrylonitrile-butadiene-styrene monomers, an acrylate, and the like. Since the article is solely polyvinyl chloride, trim and scrap portions thereof can be recycled thereby resulting in cost savings and abatement and/or elimination of any waste disposal problems. Additional cost saving is obtained in that the step of applying an adhesive or glue is eliminated.

Reference should be made to the accompanying drawing, which is a cross-sectional elevation of a lamina embodying the invention.

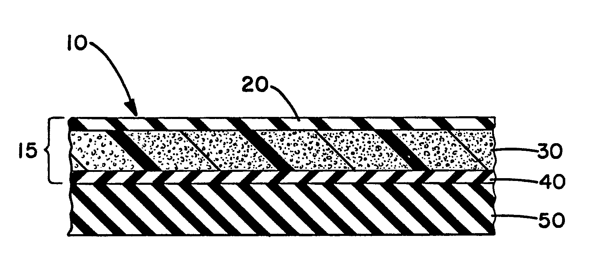

The non-substrate polyvinyl chloride sheet of the present invention is flexible. Preferably, it has an apparent bending modulus from about 100 psi to about 50,000 psi and preferably from about 1,000 psi to about 10,000 psi according to ASTM D-747. The flexible sheet of the present invention is made from one or more polyvinyl chloride layers. It is greatly preferred in the present invention that the flexible sheet contain at least one foam layer so that it is soft,and is made solely from polyvinyl chloride polymers and desirably is a homopolymer inasmuch as the inclusion of polyvinyl chloride copolymers will tend to soften the polyvinyl chloride sheet to an undesirable level. The use of copolymers is limited to small amounts of non-polyvinyl chloride repeating units such as about 15 percent or less based upon the total number of repeating units in the copolymer since it is a preferred aspect of the present invention that essentially all polyvinyl chloride lamina be utilized so that trim and scrap portions can be readily recycled. However, in the most preferred embodiments of the present invention, all of the layers which form flexible sheet 15 are a homopolymer of polyvinyl chloride and are therefore free of any other types of polymers. Such recycling results in important cost savings as well as in the elimination of waste disposal problems, and the like. According to a preferred embodiment of the present invention as shown in Fig. 1, an adhesive free interior transportation vehicle laminate generally indicated by the numeral 10 has a top skin layer 20 and a foam layer 30. Optional bottom skin layer 40 completes the layers of polyvinyl chloride which forms flexible sheet 15. As indicated in the drawing, top layer 20 desirably is solid (that is non-foam) yet is a flexible polyvinyl chloride layer. Desirably, it has a decorative finish thereon such as a grain, a print pattern, a lacquer finish, or the like. Such a finish can be applied in any conventional manner known to those skilled in the art as well as to the literature as by utilizing an embossed release paper carrier during the formation of the top skin layer, or by mechanical embossing.

It is highly desirable in the present invention to utilize a foamed layer 30 in order to ensure that the flexible polyvinyl chloride sheet is soft, pliable, and the like. The foamed layer can be formed in any conventional manner as by incorporating a conventional blowing agent into polyvinyl chloride layer 30 and heating the same to a temperature sufficient to decompose the blowing agent and hence form a foam. Naturally, blowing agents should be utilized which decompose at a sufficiently low temperature which will not degrade the polyvinyl chloride and desirably at a temperature of from about 150-220°C (300-425°F). Examples of suitable blowing agents include azodicarbonamide and azobisformamide. The amount of the blowing agent utilized is an effective amount to yield a desired density or porosity such as up to 3 or 4 parts by weight and desirably 1 or 2 parts by weight for every 100 parts by weight of polyvinyl chloride. In the present invention, it is desirable that the foam layer is such that overall sheet 15 is pliable and resilient, that is flexible, having an apparent bending modulus as noted above.

As with top skin layer 20, foam layer 30 is desirably made solely from polyvinyl chloride polymers and any necessary compounding ingredients. Bottom skin layer 40 is optional and in a preferred embodiment of the present invention is not utilized. Inasmuch as the various layers of flexible sheet 15 are made from polyvinyl chloride, they are very compatible and when formed, regardless of the particular manner utilized, readily adhere to one another, that is to an adjacent layer.

The flexible sheet lamina 15 can be formed in any conventional manner and such is generally not a part of the present invention. For example, one suitable method includes using an embossed release paper carrier and applying the top skin layer and gelling the same. The foam layer in a liquid non-expanded state is applied and gelled and subsequently the optional bottom skin layer is applied. The entire lamina can then be heated at a temperature from about 150°C to about 220°C (300-425°F) causing the layers to fuse and the foamable layer to foam and expand. An advantage of such a lamina is that it is free of any adhesives. Regardless how lamina 15 is formed, the various components thereof may also contain various additives in conventional amounts such as UV absorbers; various pigments; inorganic fillers such as calcium carbonate, clay, and the like; scavenger stabilizers such as barium, cadmium, zinc, or phosphite types; various mildewcides; flame retardants; and the like, as well as various plasticizers. Suitable plasticizers include those known to the literature such as esters of straight and branched chain alcohols such as dibutyl sebacate, dioctyl sebacate, dioctyl adipate, didecyl adipate, dioctyl azelate, triethylene glycol di(2-ethyl-hexanoate), triethylene glycol dicaprylate, and the like. Aromatic type plasticizers can also be utilized such as dibutyl phthalate, dicapryl phthalate, dioctyl phthalate, dibutoxy ethyl phthalate, dipropylene glycol dibenzoate, butyl benzyl sebacate, butyl benzyl phthalate, dibenzyl sebacate, dibenzyl phthalate, and the like. The amount of plasticizer utilized in the top skin layer is generally from about 30 to about 100 parts by weight and preferably from about 50 to about 80 parts by weight per 100 parts by weight of the polyvinyl chloride polymer. Inasmuch as the foam layer is desirably similar and compatible, the amount of plasticizer utilized therein is desirably from about 30 to about 100 and preferably from about 50 to about 80 parts by weight per 100 parts by weight of the polyvinyl chloride polymer. Inasmuch as the optional bottom skin layer is generally the same as the top skin layer, the amount of plasticizer utilized therein is generally from about 30 to about 100 and preferably from about 50 to about 80 parts by weight per 100 parts by weight of said polyvinyl chloride polymer.

Depending upon the exact interior transportation vehicle end use, the various layers of flexible lamina 15 of the preferred embodiment shown in the drawing can vary in thickness. As a very rough rule of thumb, the top skin layer is usually from about 0.1 to about 0.75mm (5-30 mils) and preferably from about 0.25-0.5mm (10-20 mils) thick, the foam layer is generally from about 0.1-8mm (5-300 mils) and preferably from about 0.75-5mm (30-200 mils)thick, and the optional bottom skin layer is generally very thin as from about 25μ-0.4mm (1-15mils)preferably from about 75μ-0.25mm (3-10 mils) thick.

In order to render the entire lamina 10 described herein a highly compatible structure, rigid substrate or sheet 50 is also desirably made from a polyvinyl chloride homopolymer. However, small amounts of various polymers which improve the heat deformation and/or impact resistance of the polyvinyl chloride can be utilized. Examples of such polymers include polymers of acrylonitrile-butadiene-styrene (ABS) or such polymers made from a different diene monomer having from 4 to 10 carbon atoms, or a different vinyl substituted aromatic monomer having from 8 to 10 carbon atoms; polymers of acrylic acid or methacrylic acid and derivatives thereof wherein the derivative portion has from 1 to 20 carbon atoms such as methyl acrylic acid, various acrylate polymers wherein the ester portion has from 1 to 20 carbon atoms such as polyethylhexyl acrylate, polybutyl acrylate, and the like, as well as acrylate copolymers such as those made from monomers of acrylate or methacrylate, dienes having from 4 to 10 carbon atoms, and vinyl substituted aromatics having from 8 to 10 carbon atoms, for example methyl methacrylate-butadiene-styrene (MBS). The amount of the heat deformation resistant or impact polymer is generally 0 or 0.1 percent up to about 30 percent by weight and preferably from about 1 to about 15 percent by weight for every 100 parts by weight of the polyvinyl chloride polymer.

In order to provide a good support when utilized in the interior of a transportation vehicle, the rigid substrate has a flexural strength modulus of from about 200,000 psi to about 400,000 psi, and preferably from about 300,000 psi to about 350,000 psi according to ASTM D-790. The rigid substrate can contain various conventional additives known to the art and to the literature as well as conventional amounts thereof. For example, various pigments, inorganic fillers, stabilizers such as scavenger type, mildewcides, flame retardants, and the like, can be utilized. If plasticizers are utilized, the amount thereof is generally low in order not to destroy the rigidity of the substrate and generally can be from 0 or 0.1 to about 10 parts by weight and preferably from about 0 or 0.1 to about 5 parts by weight per 100 parts by weight of only the polyvinyl chloride polymer. Specific types of plasticizers which can be utilized in the rigid substrate are the same as set forth above with regard to the various layers of the flexible sheet. The thickness of the substrate can vary considerably depending upon desired end use but desirably is from about 1.3 to about 10mm (0.05-0.4") and preferably from about 2.5 to about 6.5mm (0.1-0.25").

The rigid substrate can be made in any conventional manner as by mixing the polyvinyl chloride with any optional heat deformation resistant polymers and any additives such as pigments in a suitable mixer such as a Banbury and calendering or extruding the same.

According to the present invention, the flexible sheet lamina is applied to the rigid polyvinyl substrate by fusing it thereto. That is, the rigid substrate is generally heated to an effective temperature such that when the flexible sheet is applied thereto, it readily fuses and forms lamina 10. Various techniques and processes can be utilized to accomplish this result. Generally, the substrate is heated to from about 150°C (300°F) to about 230°C (450°F) and the flexible sheet applied thereto for a sufficient amount of time such that it fuses thereto. Two desirable methods include either calendering a hot rigid substrate and applying the flexible sheet thereto or extruding the rigid substrate and applying the flexible sheet thereto. When a calender is utilized, it is important that the heat and speed of the calender be adjusted to provide a smooth uniform substrate. Accordingly, temperatures of the calendered polyvinyl chloride rigid substrate generally range from about 150°C-230°C(300°F-450°F) and preferably from about 180 - 215°C(360°F - 420°F), with speeds ranging from about 1 to about 50 yards per minute and preferably from about 5 to about 30 yards per minute. The flexible sheet can either be applied at ambient temperature or can be heated as to a temperature of from about 95°C-150°C (200°F-300°F). When an extruder is utilized to accomplish the application of the flexible sheet to the substrate, the temperature of the extruded substrate is generally from about 160°C-230°C (320°- 450°F and preferably from about 190-220°C (380-430°F). The flexible sheet can be either applied at ambient temperature to the extrudate or can be heated as to a temperature of about 95-150°C (200-300°F) and applied to the extrudate. As noted, the flexible sheet is heated by the substrate to an effective temperature such that a portion thereof, for example the bottom skin layer or the foam layer, is actually partially melted and upon cooling fuses to the rigid substrate. Suitable pressure is utilized to ensure that sufficient contact and force exists between the flexible sheet and the rigid substrate so that they can fuse together.

Upon cooling, the all polyvinyl chloride lamina can be cut into appropriate sized (e.g., trimmed or perforated) sheets or the like and stored. After an appropriate sizing operation, the interior transportation vehicle lamina can be subjected to a thermoforming operation. The sheet is then subjected to a thermoforming operation wherein it is heated and shaped. Subsequent to or during the thermoforming operation, various apertures, slots, sections, and portions, to be removed, are made and the sized material, i.e. scrap, is saved. Any suitable or conventional thermoforming operation can be utilized as known to the art as well as to the literature. For example, suitable thermoforming heating temperatures of the transportation vehicle laminate can be from about 150°C-200°C (300-400°F). Generally, vacuum molding is utilized wherein the heated laminate is drawn about a mold to conform it to a desired shape. Thus, in the overall process described herein, a flexible sheet and a rigid substrate are separately made and then fused together. Subsequently, the fused laminate is thermo formed to a desired configuration, or the like. After thermoforming, the sheet is trimmed and the waste portions, scrap, and the like, are saved. The end result of the thermoforming operation is an adhesive free article which has a soft or flexible polyvinyl chloride exterior which is fused to and supported by a rigid polyvinyl chloride substrate. The thermoforming operation is generally conducted in one step. That is, the final configuration or shape is generally achieved in a one-step operation. Suitable polyvinyl chloride lamina produced by the present process generally include any use for a bus, train, airplane, truck, automobile, and the like, which is utilized within the interior of a transportation vehicle and includes such articles as door panels, arm rests, dashboards, post covers, consoles, kick panels, wall panels, window surrounds, and the like.

An important aspect of the present invention is that inasmuch as all of the various layers of the interior transportation vehicle lamina of the present invention are made essentially from polyvinyl chloride polymers, the scrap from the various sizing operation steps, for example thermoforming, trimming, etc., may be saved and subsequently recycled. Such scrap can be pelletized, ground, etc., and added to a mixer such as a Banbury or extruder where it is heated and subsequently utilized either as a blend or mixture with polyvinyl chloride forming a rigid substrate or solely, that is 100 percent, utilized as a rigid substrate for various articles. Such a recycle operation essentially eliminates the scrap problem, results in cost savings, eliminates waste disposal problems, and the like.

The invention will be better understood by reference to the following examples.

EXAMPLE 1

An automotive door panel was made as follows:

An unsupported expanded soft vinyl decorative material was made by any standard process such as:

1) Cast layers of plastisol onto embossed release paper, fuse and expand. Print and finish as necessary.

2) Calender or extrude layers of vinyl one on the next, post expand and emboss. Print and finish as necessary.

Using the soft, unsupported expanded vinyl described above, calender or extrude a rigid vinyl layer about 5mm (.200") onto the back side. The soft portion must be laminated at an embossing nip or other point immediately after the extruder die or calender roll. Care must be used to provide adequate contact pressure, but not crush the foam.

The composite is cooled via standard methods such as a cooling roll series as it exits the extruder or calender. As the rigid sheet portion cools, it becomes stiff and must be cut into sheets or wrapped on a very large diameter core for subsequent cutting into sheets.

These sheets of the laminate are then thermoformed. In this process, the composite is secured in a clamping frame and heated until soft and pliable, about 150°C(300°F). The heated material is then positioned over a mold or tool of proper design and a partial vacuum is drawn. Atmospheric pressure forces the softened composite to the shape of the tool. While in position on the tool and partially cooled, trim operations can occur such as punching holes for fixtures and cutting away excess material. Also, impressions on the soft expanded portion such as imitation stitch lines can be made at this time. An alternate forming procedure would be to pressure form using air pressure or matched metal molds clamping the material between them into the desired shape. Any of these approaches could trim away scrap and add emboss features during the forming operation. Trim scrap would be saved.

The door panel is then removed from the forming machine and stacked for subsequent assembly onto the door frame where handles, locks, window cranks, etc., are put into position.

The design of the forming tool should include edge wrapping and trim considerations. It should also allow for mounting holes or brackets and perforations for handles, etc.

Trim scrap is returned to the manufacturer to be ground, densified, and reused in the rigid portion or other similar product, eliminating the need for paying for disposal.

## Claims

1. A process for forming a polyvinyl chloride lamina (10), characterised in that a flexible polyvinyl chloride sheet (15) and a substrate polyvinyl chloride sheet for forming a rigid polyvinyl chloride substrate (50) are applied together and thermally fused to form said lamina.

2. A process according to claim 1 wherein the flexible polyvinyl chloride sheet (15) comprises a polyvinyl chloride foam layer (30).

3. A process according to claim 1 or claim 2 wherein the flexible polyvinyl chloride sheet has an ASTM D-747 bending modulus of from about 100 psi to about 50 000 psi.

4. A process according to claim 3 wherein said bending modulus is from about 1000 psi to about 10 000 psi.

5. A process according to any one of the preceding claims wherein the rigid polyvinyl chloride substrate (50) has an ASTM D-790 flexural strength modulus of from about 200,000 psi to about 400,000 psi.

6. A process according to claim 5 wherein said flexural strength modulus is from about 300,000 to about 350,000 psi.

7. A process according to any one of the preceding claims wherein heat for said fusion is derived from the substrate sheet which is hot before the sheets are applied together.

8. A process according to claim 7 wherein the substrate sheet is heated to a temperature in the range from about 150°C to about 230°C.

9. A process according to any one of the preceding claims wherein the polyvinyl chloride substrate sheet is calendered or extruded.

10. A process according to any one of the preceding claims wherein the flexible sheet (15) comprises a top polyvinyl chloride skin layer (20) and a polyvinyl chloride foam layer (30).

11. A process according to any one of the preceding claims, including removing scrap portions from the fused polyvinyl chloride lamina and subsequently recycling said scrap portions to make polyvinyl chloride products.

12. A process according to any one of the preceding claims, including forming said flexible sheet with a decorative finish thereon.

13. A process according to any one of the preceding claims, further comprising thermoforming the polyvinyl chloride lamina (10) into a vehicle interior product.

14. A process for forming a polyvinyl chloride vehicle interior lamina comprising the steps of:
forming a flexible polyvinyl chloride sheet (15);
forming a rigid polyvinyl chloride substrate (50);
applying said flexible polyvinyl chloride sheet (25) to said rigid polyvinyl chloride substrate (50) with heating of said substrate to an effective temperature whereby said flexible polyvinyl chloride sheet fuses thereto and forms a polyvinyl chloride lamina (10); and
subsequently thermoforming said polyvinyl chloride lamina (10) into an adhesive-free polyvinyl chloride vehicle interior lamina.

15. A lamina or thermoformed vehicle interior product obtainable by a process according to any one of claims 1 to 14.

16. A lamina or thermoformed product according to claim 15, wherein the flexible sheet is of polyvinyl chloride homopolymer.